# EUROPÄISCHE PATENTSCHRIFT

(11) **EP 1 451 454 B1**
(45) Veröffentlichungstag und Bekanntmachung des Hinweises auf die Patenterteilung: **23.02.2011**
(21) Anmeldenummer: 02774404.4
(22) Anmeldetag: 24.09.2002
(51) Int. Cl.: F01N 3/20, F02D 41/02, F01N 3/08, F01N 3/28, F02D 41/40

(54) **VERFAHREN ZUM BETREIBEN EINER BRENNKRAFTMASCHINE UND BRENNKRAFTMASCHINE**
METHOD FOR OPERATING AN INTERNAL COMBUSTION ENGINE AND INTERNAL COMBUSTION ENGINE
PROCEDE PERMETTANT DE FAIRE FONCTIONNER UN MOTEUR A COMBUSTION INTERNE ET MOTEUR A COMBUSTION INTERNE ASSOCIE

(30) Priorität: 28.11.2001 DE 10158333
(43) Veröffentlichungstag der Anmeldung: 01.09.2004
(73) Patentinhaber: ROBERT BOSCH GMBH, 70442 Stuttgart (DE)
(72) Erfinder: WAGNER, Jens, 70182 Stuttgart (DE); WEIGAND, Rainer, 71638 Ludwigsburg (DE)
(86) Internationale Anmeldenummer: PCT/DE2002/003606
(87) Internationale Veröffentlichungsnummer: WO 2003/048537

(56) Entgegenhaltungen:
- EP-A- 0 839 996
- EP-A- 1 079 079
- EP-A- 1 111 212
- GB-A- 2 340 054
- PATENT ABSTRACTS OF JAPAN vol. 1996, no. 02, 29. Februar 1996 (1996-02-29) & JP 07 279645 A (NIPPON SOKEN INC), 27. Oktober 1995 (1995-10-27)
- PATENT ABSTRACTS OF JAPAN vol. 1998, no. 04, 31. März 1998 (1998-03-31) & JP 09 317440 A (NIPPON SOKEN INC), 9. Dezember 1997 (1997-12-09)

## Beschreibung

### Stand der Technik

Die Erfindung betrifft ein Verfahren nach dem Oberbegriff des Anspruchs 1 sowie eine Brennkraffmaschine nach dem Oberbegriff des Anspruchs 7. Ein solches Verfahren und eine solche Brennkraftmaschine ist jeweils aus der EP 1 112 212 A2 bekannt.

Die Entzündung des nacheingespritzten Kraftstoffs erfolgt aufgrund der im Brennraum ablaufenden bzw. abgelaufenen Entzündung des zuerst eingespritzten Kraftstoffes. Bei Benzindirekteinspritz-Brennkraftmaschinen wird eine derartige Doppeleinspritzung durchgeführt, um hohe Abgastemperaturen zur Aufheizung eines oder mehrerer Katalysatoren zur Abgasnachbehandlung zu erreichen. Neben einer raschen Aufheizung der Katalysatoren führt die Doppeleinspritzung auch zu einer Verbesserung des Laufes der Brennkraftmaschine bei oder kurz nach einem Kaltstart.

Die katalytische Abgasreinigung setzt effektiv erst oberhalb einer Mindest-Temperatur der Katalysatoren ein. Es ist bekannt, die Abgasnachbehandlung in mehreren Katalysatoren erfolgen zu lassen. Dabei kann ein kleinvolumiger Vor-Katalysator, der im Abgasstrang räumlich in der Nähe des Auslassventils des Brennraumes angeordnet ist, sowie ein großvolumiger Haupt-Katalysator Verwendung finden. Diese Trennung bietet den Vorteil, dass der Vor-Katalysator durch das heiße Abgas schnell aufgeheizt wird und so eine erste Umsetzung ermöglicht, während der Haupt-Katalysator langsamer die Betriebstemperatur erreicht, ab der er das Abgas ausreichend reinigt.

Bei der Doppeleinspritzung hat sich als nachteilig herausgestellt-, dass der nacheingespritzte Kraftstoff nicht vollständig verbrennt. Daher kommt es zu hohen Kraftstoff-Emissionen bei gleichzeitig hohem Sauerstoffanteil im Abgas. Bei Verwendung eines Vor-Katalysators reagiert der in dem Abgas noch unverbrannte Kraftstoff teilweise am Vor-Katalysator und ergibt dort eine starke Exothermie. Dadurch entstehen auf der Vor-Katalysator-Oberfläche lokale Hot-Spots, die punktuell zu einer Aufheizung des Vor-Katalysators über dessen maximal zulässige Betriebstemperatur führen. Dies kann zu einer dauerhaften Schädigung oder Zerstörung des Vor-Katalysators durch Sinter-Effekte führen. Bei Doppeleinspritzung kann deshalb die Einhaltung der Abgasgesetzgebung nicht über die Fahrzeuglebensdauer gewährleistet werden.

Der vorliegenden Erfindung liegt deshalb die Aufgabe zugrunde, eine effektive Aufheizung eines hinter dem Vorkatalysator angeordneten NOx- Speicherkatalysators zu ermöglichen, die von den Vorteilen der Doppeleinspritzung (hohe Abgastemperaturen) Gebrauch macht, ohne eine unkontrollierte und unerwünschte Nachreaktion in einem Katalysator, insbesondere in dem Vor-Katalysator, in Kauf nehmen zu müssen.

Diese Aufgabe wird jeweils durch die Merkmale der unabhängizen Ansprüche gelöst.

Das erfindungsgemäße Verfahren hat den Vorteil, dass keine unkontrollierte Nachverbrennung des in dem Brennraum nicht verbrannten Kraftstoffanteils in einem Katalysator, insbesondere in dem Vor-Katalysator, erfolgt. Dadurch kann es zu keiner Beschädigung des Katalysators kommen. Vielmehr wird kontrollierte Nachverbrennung des in dem Brennraum nicht verbrannten Kraftstoffanteils durch gezielte Erhitzung der Abgase erreicht. Durch die Erhitzung reagiert der nicht verbrannte Kraftstoffanteil mit dem in dem Abgasstrom enthaltenen Sauerstoff. Dies führt zu einer zusätzlichen Exothermie, wodurch das Abgas seine Temperatur erhöht und ein rasches Aufheizen der Katalysatoren ermöglicht wird. Die chemische Belastung des dem Brennraum nachgeschalteten Katalysators wird hierdurch effektiv reduziert. Die chemische Umsetzung des in dem Brennraum unverbrannten Kraftstoffanteils erfolgt nicht, wie bei dem Stand der Technik, hauptsächlich in dem dem Brennraum nachgeschalteten Katalysator, sondern vorteilhafterweise vor diesem. Die durch die Verbrennung zusätzlich frei werdende Wärme führt zu einer Aufheizung der Katalysatoren, insbesondere des Vor-Katalysators, wobei eine derartige Aufheizung für dessen Funktionalität wesentlich unkritischer ist als die gemäß dem bekannten Stand der Technik auftretenden Hot-Spots, die zur Sinterung auf der Katalysatoroberfläche führen können. Insbesondere beim Kaltstart der Brennkraftmaschine ist es denkbar, diese im Schichtbetrieb mit Doppeleinspritzung zu betreiben, da die Nachverbrennung des Kraftstoffanteils, der nicht in dem Brennraum verbrennt, ebenfalls zur Aufheizung des Vor-Katalysators benutzt werden kann, so dass dieser schneller auf Arbeitstemperatur gebracht werden kann. Vorteilhafterweise erfolgt die Erhitzung für die Nachverbrennung durch externe Energiezufuhr in die abgeführten Abgase. Im Gegensatz zu bekannten Elektro-Katalysatoren, bei denen das katalytische Material geheizt wird, findet erfindungsgemäß keine Heizung von katalytischem Material statt, sondern es wird direkt in das Abgas, das ein Luft-Kraftstoff-Gemisch umfasst, Energie eingetragen. Über das Zuführen von Energie erfolgt die chemische Reaktion induziert. Die Aktivierungsenergie der exothermen Nachverbrennung wird also nicht durch eine katalytische Umwandlung herabgesetzt, sondern direkt in Form von Wärme zur Verfügung gestellt.

Der Nachverbrennung sind mehrere Katalysatoren nachgeschaltet, wobei insbesondere ein Vor-Katalysator unmittelbar der Nachverbrennung nachgeschaltet ist und dem vorkatalysator wenigstens ein Haupt-Katalysator bzw. ein weiterer 3-Wege- und ein NOx-Speicherkatalysator nachgeschaltet ist. Dies hat den bereits angesprochenen Vorteil, dass der Vor-Katalysator aufgrund der bei der Nachverbrennung frei werdenden Energie rasch auf Betriebstemperatur aufgeheizt wird.

Der NOx-Speicherkatalysator ist vorteilhafterweise direkt vor dem Haupt-Katalysator im Abgasstrang angeordnet. Beim NOx-Speicherkatalysator wird neben Stickoxyden an der Katalysatoroberfläche auch Schwefel angelagert. Sobald das NOx-Speichervermögen des Speicherkatalysators durch den eingespeicherten Schwefel deutlich reduziert ist, muss der Speicherkatalysator entschwefelt werden. Dazu sind hohe Katalysatortemperaturen, die über 650° C liegen, erforderlich. Aufgrund der gezielten Nachverbrennung des in dem Abgas vorhandenen Kraftstoffanteils können sehr hohe Abgastemperaturen kurzfristig realisiert werden, die eine Aufheizung des NOx-Speicherkatalysators bewirken können.

Dass die Erhitzung für die Nachverbrennung über elektrisch beheizbare Heizquellen erfolgt, hat den Vorteil, dass relativ schnell hohe Temperaturen bereitgestellt werden können. Vorteilhafterweise kann über den elektrischen Widerstand der Heizquellen die Höhe der Temperatur der Erhitzung mittelbar bestimmt werden. Dies trägt zu einer guten Regelung und Steuerung des Verfahrens bei.

Eine vorteilhafte Ausgestaltung zeichnet sich dadurch aus, dass die Erhitzung für die Nachverbrennung der Abgase in Abhängigkeit von der Temperatur der Abgase und/oder der Temperatur eines oder mehrerer Katalysatoren, insbesondere des Vor-Katalysators, erfolgt. Durch eine derartige Ansteuerung der Erhitzung kann auf Katalysator-Anforderungen dynamisch reagiert werden.

Hierzu kann vorgesehen sein, dass die Erhitzung für die Nachverbrennung bei einer Temperatur des Vor-Katalysators erfolgt, die unterhalb der Soll-Betriebstemperatur des Vor-Katalysators liegt. Durch die Nachverbrennung des Kraftstoffes im Abgas kann folglich eine rasche Erhitzung des Vor-Katalysators auf die Soll-Betriebstemperatur erfolgen.

Andererseits ist ebenfalls denkbar, dass die Erhitzung für die Nachverbrennung bei einer Temperatur des Vor-Katalysators erfolgt, die oberhalb der Soll-Betriebstemperatur des Vor-Katalysators liegt. Dies führt dazu, dass die Kraftstoff-Belastung des Vor-Katalysators eingedämmt wird und die Entstehung von Wärme innerhalb des Katalysators begrenzt wird. Dies führt zu einer Schonung des Vor-Katalysators. Ferner kann damit der für den Vor-Katalysator maximal mögliche Wärmestrom zur Heizung des Haupt-Katalysators bereitgestellt werden.

Das Verfahren eignet.sich insbesondere zur Durchführung beim Kaltstart der Brennkraftmaschine. Erfindungsgemäß erfolgt eine sehr schnelle Anhebung der Temperaturen des Vor-Katalysators, da dieser durch die heißen Reaktionsprodukte der Nachverbrennung geheizt wird. Ein schnelleres Erreichen der Arbeitstemperatur des Vor-Katalysators setzt die Schadstoffemission im Kaltstart deutlich herab.

Das erfindungsgemäße Verfahren erlaubt ferner die Regelung der Exotherme des Vor-Katalysators und kann so dazu verwendet werden, den zulässigen Abgaswärmestrom zu erhöhen. Die Anforderungen von heißem Abgas zur Beheizung des Hauptkatalysators oder des NOx-Speicherkatalysators wird damit - unter der Randbedingung des maximal möglichen Energieeintrags in den Vor-Katalysator - schneller erfüllt und trägt so zu einer Reduzierung der Schadstoffemission bei. Die Heizquelle kann einen elektrisch bestrombaren und damit heizbaren Heizdraht, insbesondere in Form eines engmaschigen Drahtgitters, umfassen. Die Heizquelle kanne auch ein elektrisch bestrombares und damit heizbares Kreuzgitter umfassen. Die Abgase werden zur Erhitzung vorteilhafterweise durch das Drahtgitter bzw. das Kreuzgitter geleitet. Bei beheiztem Drahtgitter bzw. Kreuzgitter erhitzen sich die Abgase derart, dass eine Nachverbrennung des in dem Brennraum nicht verbrannten Kraftstoffanteils erfolgen kann.

Um eine besonders vorteilhafte Abgasreinigung zu erzielen, sind bei der erfindungsgemäßen Heizkraftmaschine mehrere Katalysatoren der Heizquelle nachgeschaltet, wobei insbesondere ein Vor-Katalysator unmittelbar der Heizquelle nachgeschaltet ist. Vorteilhafterweise ist dem Vor-Katalysator wenigstens ein Hauptkatalysator und ein NOx-Speicherkatalysator nachgeschaltet.

Eine besonders vorteilhafte Brennkraftmaschine zeichnet sich dadurch aus, dass ein Regel- und/oder Steuergerät vorgesehen ist, dass die Höhe der Temperatur der Erhitzung der Heizquelle in Abhängigkeit von der Temperatur der Abgase und/oder der Temperatur wenigstens eines Katalysators, insbesondere eines Vor-Katalysators, regelt und/oder steuert.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

### Zeichnungen

Es zeigen:
- Figur 1: eine schematische Darstellung einer erfindungsgemäßen Brennkraftmaschine;
- Figur 2: eine erste Ausführungsform einer Heizquelle einer erfindungsgemäßen Brennkraftmaschine; und
- Figur 3: eine zweite Ausführungsform einer Heizquelle einer erfindungsgemäßen Brennkraftmaschine.

### Beschreibung der Figuren

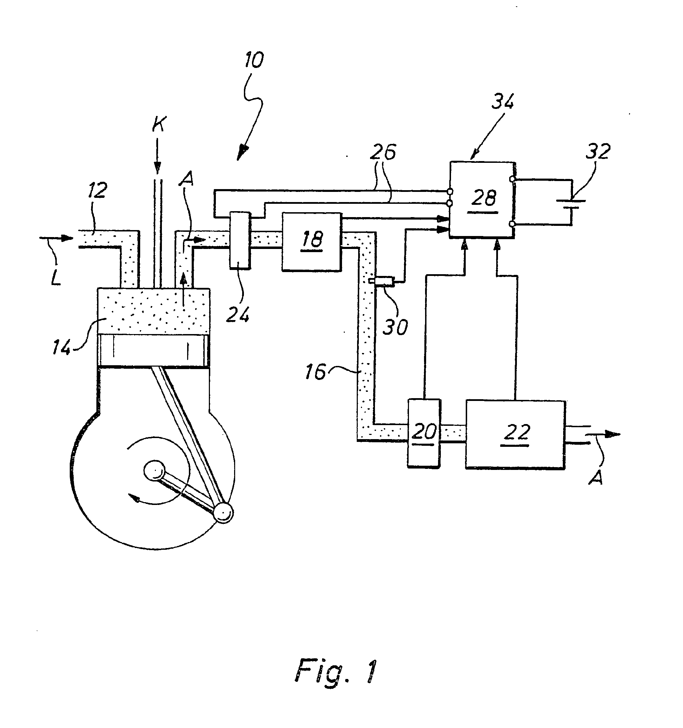

Die Figur 1 zeigt in schematischer Darstellung eine erfindungsgemäße Brennkraftmaschine 10, mit einem Lufteinlass 12, einem Brennraum 14 und einem Abgasstrang 16. Der Brennraum 14 weist nicht dargestellte Einlass- und Auslassventile auf. Ferner ist ein nicht dargestelltes Einspritzventil vorgesehen, durch welches Kraftstoff K in den Brennraum 14 eingespritzt werden kann.

Der Abgasstrang 16 weist insgesamt drei Katalysatoren 18, 20 und 22 auf. Der Katalysator 18 ist ein kleinvolumiger Vor-Katalysator. Bei dem Katalysator 20 handelt es sich um einen NOx-Speicherkatalysator. Dem NOx-Speicherkatalysator 20 ist ein großvolumiger Haupt-Katalysator 22 nachgeschaltet. Zwischen dem Brennraum 14 und dem Vor-Katalysator 18 ist eine Heizquelle 24 angeordnet. Die Heizquelle 24 ist vorteilhafterweise elektrisch bestrombar und damit heizbar. Wie der Figur 1 weiterhin entnommen werden kann, ist die Heizquelle 24 über elektrische Leitungen 26 mit einem Steuer- und Regelgerät 28 verbunden. Das Steuer- und Regelgerät 28 steuert und regelt die Erhitzung der Heizquelle 24.

Als Eingangswerte stehen dem Steuer- und Regelgerät 28 Messgrößen aus den Katalysatoren 18, 20 und 22 zur Verfügung. Insbesondere interessiert die Temperatur der jeweiligen Katalysatoren 18, 20 und 22. In dem Abgasstrang 16 ist ferner ein Temperatursensor 30 vorgesehen, über den das Steuer- und Regelgerät 28 Informationen über die Abgastemperatur des Abgases A erhält. Weitere Eingangsgrößen 34 des Steuer- und Regelgeräts 28 können die Art des Betriebes der Brennkraftmaschine (Schichtbetrieb oder Homogenbetrieb; Einfacheinspritzung oder Doppeleinspritzung) sowie weitere spezifische Größen umfassen.

Zur Versorgung der Heizquelle 24 mit Strom ist das Steuer- und Regelgerät 28 an eine Gleichstromquelle 32 angeschlossen.

Die Brennkraftmaschine 10 kann derart betrieben werden, dass während des Arbeitszykluses der Brennkraftmaschine 10 Kraftstoff K direkt in den Brennraum 14 eingespritzt wird, wobei nach dem Einspritzen des Kraftstoffes für den eigentlichen Arbeitszyklus nochmals Kraftstoff K direkt in den Brennraum nacheingespritzt wird. Der nacheingespritzte Kraftstoff entzündet sich aufgrund der bereits im Brennraum ablaufenden oder abgelaufenen Entzündung des voreingespritzten Kraftstoffes. Diese Doppeleinspritzung führt insbesondere beim Kaltstart der Brennkraftmaschine zu einem guten Lauf der Brennkraftmaschine und zu hohen Abgastemperaturen. Hohe Abgastemperaturen sind deshalb erwünscht, damit die Katalysatoren 18, 20 und 22 möglichst schnell ihre Betriebstemperaturen erreichen und die Schadstoffemission reduzieren.

Um zu verhindern, dass der in dem Brennraum nicht verbrannte Kraftstoffanteil, der sich in dem abgeführten Abgas befindet, nicht erst in einem Katalysator 18, 20 und 22, und insbesondere in dem Katalysator 18, nachreagiert, ist die externe Heizquelle 24 vorgesehen. Die Heizquelle 24 erhitzt den Abgasstrom derart, dass der in dem Brennraum 14 nicht verbrannte Kraftstoffanteil nachverbrannt wird, bevor das Abgas dem Vor-Katalysator 18 und den weiteren Katalysatoren 20 und 22 zugeführt wird. Dies führt zu einer Schonung des Vor-Katalysators 18.

Durch die aufgrund der Heizquelle 24 stattfindenen Nachverbrennung wird außerdem die Temperatur des Abgases erhöht. Hierdurch erreichen die Katalysatoren 18, 20 und 22 relativ rasch ihre Betriebstemperatur. Insbesondere kann außerdem die Abgastemperatur derart hoch gehalten werden, dass sich in dem NOx-Speicherkatalysator 20 eingelagerter Schwefel löst und der NOx-Speicherkatalysator 20 entschwefelt wird.

Vorteilhafterweise regelt und steuert das Regel- und Steuergerät 28 die Heizquelle 24 in Abhängigkeit von der Temperatur wenigstens eines der Katalysatoren 18, 20 und 22 und/oder der Temperatur des Abgases. Dabei kann die Temperatur der Heizquelle 24 über ihren elektrischen Widerstand bestimmt werden. Ferner kann über den elektrischen Widerstand eine Diagnose der Funktionalität der Heizquelle erfolgen.

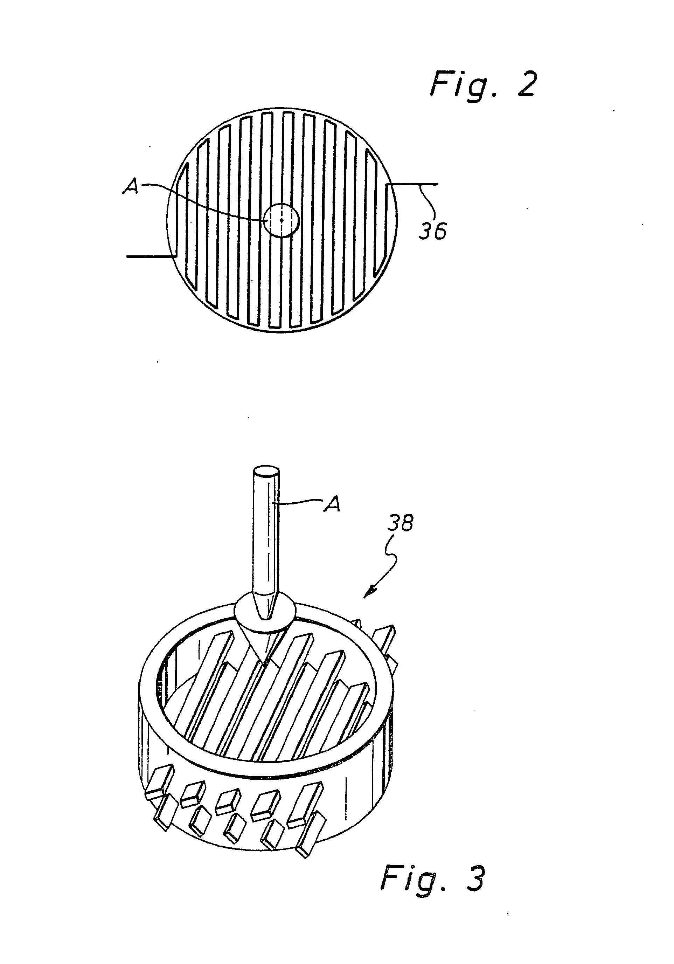

Die Heizquelle 24 kann gemäß Figur 2 als bestrombares und damit heizbares Drahtgitter ausgebildet sein. Der Abgasstrom durchströmt hierbei das Drahtgitter, das einen Heizdraht 36 umfasst.

Andererseits ist denkbar, dass die Heizquelle 24 als elektrisch bestrombares und damit heizbares Kreuzgitter, wie es in Figur 3 dargestellt ist, ausgebildet ist. Das Kreuzgitter hat den Vorteil, dass aufgrund der gewissen Umlenkung des Abgasstromes A ein guter Wärmeaustausch stattfindet. An Heizquellen, wie sie in Figur 2 und 3 dargestellt sind, sind hohe Anforderungen zu stellen. Zum einen soll es eine möglichst große Oberfläche aufweisen, um einen vorteilhaften Wärmeaustausch zu ermöglichen. Das Material muss den thermischen und mechanischen Beanspruchungen standhalten.

Anstelle eines Drahtgitters oder Kreuzgitters ist es auch denkbar, eine Glühkerze als Heizquelle 24 zu verwenden.

Im Schichtbetrieb oder auch im Homogenbetrieb der Brennkraftmaschine 10 kann die Heizquelle 24 ferner dazu verwendet werden, den Abgasstrom zu erhitzen, so dass der Vor-Katalysator 18 schneller seine Betriebstemperatur erreicht. Die Höhe der Temperatur der Heizquelle 24 kann hierbei insbesondere in Abhängigkeit der Temperatur der Abgase oder in Abhängigkeit der Temperatur des Vor-Katalysators 18 erfolgen.

## Patentansprüche

1. Verfahren zum Betreiben einer Brennkraftmaschine (10) mit mindestens einem Brennraum (14), bei dem während des Arbeitszyklus der Brennkraftmaschine Kraftstoff (K) direkt in den Brennraum (14) eingespritzt wird, und bei dem nach dem Einspritzen des Kraftstoffes (K) für den eigentlichen Arbeitszyklus nochmals Kraftstoff (K) direkt in den Brennraum (14) nacheingespritzt wird, wobei sich der nacheingespritzte Kraftstoff (K) entzündet, und wobei aus dem Brennraum (14) abgeführte Abgase zur Nachverbrennung eines in dem Brennraum (14) nicht verbrannten Kraftstoffanteils erhitzt werden, bevor sie wenigstens einem Katalysator (18, 20, 22) zur Abgasnachbehandlung zugeführt werden, wobei die Erhitzung für die Nachverbrennung über wenigstens eine elektrisch beheizbare Heizquelle (24) erfolgt, und wobei ein Vorkatalysator (18) unmittelbar der Nachverbrennung nachgeschaltet ist, **dadurch gekennzeichnet, dass** dem Vorkatalysator (18) wenigstens ein Haupt- bzw. ein 3-Wege-Katalysator (22) und ein NOx-Speicherkatalysator (20) nachgeschaltet ist.

2. Verfahren nach Anspruch 1, **dadurch gekennzeichnet, dass** die Erhitzung für die Nachverbrennung der Abgase (A) in Abhängigkeit von der Temperatur der Abgase (A) und/oder der Temperatur eines oder mehrerer Katalysatoren (18, 20, 22), insbesondere des Vorkatalysators (18), erfolgt.

3. Verfahren nach Anspruch 2, **dadurch gekennzeichnet, dass** die Erhitzung für die Nachverbrennung bei einer Temperatur des Vorkatalysators (18) erfolgt, die unterhalb der Sollbetriebstemperatur des Vorkatalysators (18) liegt.

4. Verfahren nach Anspruch 2 oder 3, **dadurch gekennzeichnet, dass** die Erhitzung für die Nachverbrennung bei einer Temperatur des Vorkatalysators (18) erfolgt, die oberhalb der Sollbetriebstemperatur des Vorkatalysator (18) liegt.

5. Verfahren nach Anspruch 1, **dadurch gekennzeichnet, dass** über den elektrischen Widerstand der Heizquellen (24) die Höhe der Temperatur der Erhitzung bestimmbar ist.

6. Verfahren nach einem der vorhergehenden Ansprüche, **dadurch gekennzeichnet, dass** es beim Kaltstart der Brennkraftmaschine (10) Verwendung findet.

7. Brennkraftmaschine (10), umfassend wenigstens einen Brennraum (14), mindestens ein Ein- und mindestens ein Auslassventil, mindestens ein Einspritzventil, wobei während des Arbeitszyklus der Brennkraftmaschine Kraftstoff (K) direkt in den Brennraum (14) eingespritzt wird und nach dem Einspritzen des Kraftstoffes (K) für den eigentlichen Arbeitszyklus nochmals Kraftstoff (K) direkt in den Brennraum (14) nacheingespritzt wird, wobei sich der nacheingespritzte Kraftstoff (K) in dem Brennraum (14) entzündet, wobei die aus dem Brennraum (14) abgeführten Abgase (A) zur Nachverbrennung des in dem Brennraum (14) nicht verbrannten Kraftstoffanteils über eine elektrisch beheizbare Heizquelle (24) geleitet werden, wobei ein Vorkatalysator (18) unmittelbar der Heizquelle (24) nachgeschaltet ist, **dadurch gekennzeichnet, dass** dem Vorkatalysator (18) wenigstens ein Hauptkatalysator (22) beziehungsweise 3-Wege-Katalysator und ein NOx-Speicherkatalysator (20) nachgeschaltet ist.

8. Brennkraftmaschine (10) nach Anspruch 7, **dadurch gekennzeichnet, dass** die Heizquelle (24) einen elektrisch bestrombaren und damit heizbaren Heizdraht (36), insbesondere in Form eines engmaschigen Drahtgitters, umfasst.

9. Brennkraftmaschine (10) nach einem der Ansprüche 7 oder 8, **dadurch gekennzeichnet, dass** die Heizquelle (24) ein elektrisch bestrombares und damit heizbares Kreuzgitter umfasst.

10. Brennkraftmaschine nach einem der Ansprüche 7 bis 9, **dadurch gekennzeichnet, dass** ein Regel- und/oder Steuergerät (28) vorgesehen ist, das die Höhe der Temperatur der Heizquelle (24) in Abhängigkeit von der Temperatur der Abgase (A) und/oder der Temperatur wenigsten eines Katalysators (18, 20, 22), insbesondere eines Vorkatalysators (18), regelt und/oder steuert.

## Claims

1. Method for operating an internal combustion engine (10) with at least one combustion chamber (14), in which fuel (K) is injected directly into the combustion chamber (14) during the operating cycle of the internal combustion engine, and in which, after the fuel (K) for the actual operating cycle has been injected, fuel (K) is after-injected once again directly into the combustion chamber (14), wherein the after-injected fuel (K) is ignited, and wherein exhaust gases discharged from the combustion chamber (14) are heated for the after-burning of a fuel content not burnt in the combustion chamber (14) before said exhaust gases are supplied to at least one catalytic converter (18, 20, 22) for aftertreatment of the exhaust gases, wherein the heating for the after-burning operation takes place via at least one electrically heatable heating source (24), and wherein a primary catalytic converter (18) is connected directly downstream of the after-burning operation, **characterized in that** at least one main catalytic converter or a three-way catalytic converter (22) and an NOx storage catalytic converter (20) are connected downstream of the primary catalytic converter (18).

2. Method according to Claim 1, **characterized in that** the heating for the after-burning of the exhaust gases (A) takes place as a function of the temperature of the exhaust gases (A) and/or of the temperature of one or more catalytic converters (18, 20, 22), in particular of the primary catalytic converter (18).

3. Method according to Claim 2, **characterized in that** the heating for the after-burning operation takes place at a temperature of the primary catalytic converter (18), which temperature is below the desired operating temperature of the primary catalytic converter (18).

4. Method according to Claim 2 or 3, **characterized in that** the heating for the after-burning operation takes place at a temperature of the primary catalytic converter (18), which temperature lies above the desired operating temperature of the primary catalytic converter (18).

5. Method according to Claim 1, **characterized in that** the heating temperature level can be determined via the electric resistance of the heating sources (24).

6. Method according to one of the preceding claims, **characterized in that** said method is used when cold starting the internal combustion engine (10).

7. Internal combustion engine (10), comprising at least one combustion chamber (14), at least one inlet valve and at least one outlet valve, and at least one injection valve, wherein fuel (K) is injected directly into the combustion chamber (14) during the operating cycle of the internal combustion engine and, after the fuel (K) for the actual operating cycle has been injected, fuel (K) is after-injected once again directly into the combustion chamber (14), wherein the after-injected fuel (K) in the combustion chamber (14) is ignited, wherein the exhaust gases (A) discharged from the combustion chamber (14) are conducted over an electrically heatable heating source (24) for the after-burning of the fuel content not burnt in the combustion chamber (14), and wherein a primary catalytic converter (18) is connected directly downstream of the heating source (24), **characterized in that** at least one main catalytic converter (22) or three-way catalytic converter and an NOx storage catalytic converter (20) are connected downstream of the primary catalytic converter (18).

8. Internal combustion engine (10) according to Claim 7, **characterized in that** the heating source (24) comprises a heating wire (36), in particular in the form of a close-mesh wire lattice, which can be electrically energized and therefore heated.

9. Internal combustion engine (10) according to either of Claims 7 and 8, **characterized in that** the heating source (24) comprises a cross lattice which can be electrically energized and therefore heated.

10. Internal combustion engine according to one of Claims 7 to 9, **characterized in that** a regulating and/or control device (28) is provided, which device regulates and/or controls the temperature level of the heating source (24) as a function of the temperature of the exhaust gases (A) and/or of the temperature of at least one catalytic converter (18, 20, 22), in particular of a primary catalytic converter (18).

## Revendications

1. Procédé pour faire fonctionner un moteur à combustion interne (10) comprenant au moins une chambre de combustion (14), dans lequel, pendant le cycle de travail du moteur à combustion interne, du carburant (K) est injecté directement dans la chambre de combustion (14), et dans lequel, après l'injection du carburant (K) pour le cycle de travail proprement dit, du carburant (K) est encore post-injecté directement dans la chambre de combustion (14), le carburant post-injecté (K) s'allumant, et les gaz d'échappement évacués hors de la chambre de combustion (14) étant chauffés en vue d'une post-combustion d'une proportion du carburant non brûlée dans la chambre de combustion (14), avant d'être acheminés à au moins un catalyseur (18, 20, 22) pour un post-traitement des gaz d'échappement, le chauffage pour la post-combustion s'effectuant par le biais d'au moins une source de chaleur (24) pouvant être chauffée électriquement, et un pré-catalyseur (18) étant monté directement après la post-combustion, **caractérisé en ce que** l'on monte en aval du pré-catalyseur (18) au moins un catalyseur principal ou catalyseur à 3 voies (22) et un catalyseur à accumulation de NOx (20).

2. Procédé selon la revendication 1, **caractérisé en ce que** le chauffage pour la post-combustion des gaz d'échappement (A) a lieu en fonction de la température des gaz d'échappement (A) et/ou de la température d'un ou de plusieurs catalyseurs (18, 20, 22), en particulier du pré-catalyseur (18).

3. Procédé selon la revendication 2, **caractérisé en ce que** le chauffage pour la post-combustion a lieu à une température du pré-catalyseur (18) qui est inférieure à la température de fonctionnement de consigne du pré-catalyseur (18).

4. Procédé selon la revendication 2 ou 3, **caractérisé en ce que** le chauffage pour la post-combustion a lieu à une température du pré-catalyseur (18) qui est supérieure à la température de fonctionnement de consigne du pré-catalyseur (18).

5. Procédé selon la revendication 1, **caractérisé en ce que** le niveau de température du chauffage peut être déterminé par le biais de la résistance électrique des sources de chauffage (24).

6. Procédé selon l'une quelconque des revendications précédentes, **caractérisé en ce qu'**il est utilisé au démarrage à froid du moteur à combustion interne (10).

7. Moteur à combustion interne (10), comprenant au moins une chambre de combustion (14), au moins une soupape d'entrée et au moins une soupape de sortie, au moins une soupape d'injection, du carburant (K) étant injecté directement dans la chambre de combustion (14) pendant le cycle de travail du moteur à combustion interne, et après l'injection du carburant (K) pour le cycle de travail proprement dit, du carburant (K) étant encore post-injecté directement dans la chambre de combustion (14), le carburant post-injecté (K) dans la chambre de combustion (14) s'allumant, les gaz d'échappement (A) évacués hors de la chambre de combustion (14) étant guidés en vue de la post-combustion de la proportion de carburant non brûlée dans la chambre de combustion (14) par le biais d'une source de chaleur (24) pouvant être chauffée électriquement, un pré-catalyseur (18) étant monté directement en aval de la source de chaleur (24), **caractérisé en ce que** l'on monte en aval du pré-catalyseur (18) au moins un catalyseur principal (22) ou catalyseur à 3 voies et un catalyseur à accumulation de NOx (20).

8. Moteur à combustion interne (10) selon la revendication 7, **caractérisé en ce que** la source de chaleur (24) comprend un filament chauffant (36) pouvant être alimenté en courant électrique et donc chauffable, notamment sous forme d'un treillis métallique à mailles serrées.

9. Moteur à combustion interne (10) selon l'une quelconque des revendications 7 ou 8, **caractérisé en ce que** la source de chaleur (24) comprend un treillis croisé pouvant être alimenté en courant électrique et donc chauffable.

10. Moteur à combustion interne selon l'une quelconque des revendications 7 à 9, **caractérisé en ce qu'**il est prévu un appareil de régulation et/ou de commande (28), qui régule et/ou commande le niveau de température de la source de chauffage (24) en fonction de la température des gaz d'échappement (A) et/ou de la température d'au moins un catalyseur (18, 20, 22), en particulier d'un pré-catalyseur (18).
